(19) Europäisches Patentamt / European Patent Office / Office européen des brevets

(11) **EP 2 150 833 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **08749477.9**

(22) Anmeldetag: **16.05.2008**

(51) Int Cl.:
**G01S 5/08** (2006.01)   **G01S 5/06** (2006.01)

(86) Internationale Anmeldenummer:
**PCT/EP2008/003971**

(87) Internationale Veröffentlichungsnummer:
**WO 2008/151706 (18.12.2008 Gazette 2008/51)**

(54) **VORRICHTUNG ZUM BESTIMMEN EINER VORRICHTUNGSPOSITION**

DEVICE FOR DETERMINING A DEVICE POSITION

DISPOSITIF POUR DÉTERMINER LA POSITION D'UN DISPOSITIF

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.06.2007 DE 102007027141**

(43) Veröffentlichungstag der Anmeldung:
**10.02.2010 Patentblatt 2010/06**

(73) Patentinhaber: **Fraunhofer-Gesellschaft zur Förderung der angewandten Forschung e.V.**
**80686 München (DE)**

(72) Erfinder:
- **HUPP, Jürgen**
  **90425 Nürnberg (DE)**
- **GHERMANN, Volker**
  **91054 Erlangen (DE)**
- **BÖHM, Felix**
  **91058 Erlangen (DE)**
- **FLÜGEL, Christian**
  **90409 Nürnberg (DE)**
- **ELBERSKIRCH, Dominik**
  **90409 Nürnberg (DE)**

(74) Vertreter: **Zimmermann, Tankred Klaus et al**
**Schoppe, Zimmermann, Stöckeler & Zinkler Patentanwälte**
**Postfach 246**
**82043 Pullach bei München (DE)**

(56) Entgegenhaltungen:
**EP-A- 1 102 085         WO-A-02/33435**
**WO-A-92/13284         WO-A-99/21389**
**WO-A-99/33302         US-A1- 2002 049 064**
**US-A1- 2006 239 202**

- **JAN BLUMENTHAL, FRANK REICHENBACH, DIRK TIMMERMANN: "Precise Positioning with a Low Complexity Algorithm in Ad hoc Wireless Sensor Networks" PIK - PRAXIS DER INFORMATIONSVERARBEITUNG UND KOMMUNIKATION, [Online] Bd. 28, Nr. 2, Juni 2005 (2005-06), Seiten 80-85, XP002495976 Germany ISBN: 3-598-01252-7 Gefunden im Internet: URL:rtl.e-technik.uni-rostock.de/ ~frei/geo sens/dateien/BRT05.pdf> [gefunden am 2008-09-11]**
- **SAVVIDES A ET AL: "DYNAMIC FINE-GRAINED LOCALIZATION IN AD-HOC NETWORKS OF SENSORS" 16. Juli 2001 (2001-07-16), PROCEEDINGS OF THE 7TH. ANNUAL INTERNATIONAL CONFERENCE ON MOBILE COMPUTING AND NETWORKING. MOBICOM 2001. ROME, ITALY, JULY 16 - 21, 2001; [ANNUAL INTERNATIONAL CONFERENCE ON MOBILE COMPUTING AND NETWORKING], NEW YORK, NY : ACM, US, PAGE(S) 166 - 179 , XP001072002 ISBN: 978-1-58113-422-3 Spalten 1-5,7-16**

EP 2 150 833 B1

**Beschreibung**

Die vorliegende Erfindung bezieht sich auf den Bereich der Positionsbestimmung, wie sie beispielsweise in Empfängern in Kommunikations-, Multi-hop- oder Ad-hoc-Netzwerken, bzw. Sensornetzwerken vorkommen kann.

In schnurlosen Kommunikationsnetzwerken ist eine Positionsbestimmung einzelner Netzwerkknoten häufig nur ungenau möglich. Insbesondere in dezentralisierten Netzwerken wird häufig eine kooperative Lokalisierung durchgeführt, wobei diese speziell in sogenannten drahtlosen Sensornetzwerken vorkommen kann. Bestimmte Netzwerkknoten, es wird hier auch von Ankern oder Ankerknoten gesprochen, von denen die Position bekannt ist, dienen hierbei als Stützstellen, um eine Position eines Empfängers zu ermitteln. Beispielsweise können solche Ankerknoten ihre Position aussenden oder übermitteln, so dass diese dann von anderen mobilen Funkknoten empfangen werden können. Die empfangenen Positionsinformationen der umliegenden Anker können dann ausgewertet werden, wobei durch eventuelle Einbeziehung anderer Empfangsparameter, beispielsweise der Empfangsfeldstärke, die eigene Position eines Empfängers berechnet werden kann. Problematisch hierbei ist die oft nur eingeschränkte Genauigkeit, die beispielsweise durch Effekte im Funkfeld hervorgerufen wird.

Ein konventionelles Verfahren ist beispielsweise die Schwerpunktmethode bzw. -bestimmung, die auch engl. centroid determination genannt wird. Hierbei empfängt ein Netzwerkknoten von umliegenden Sendern deren Senderpositionen, und bestimmt einen geometrischen Schwerpunkt. Da bei diesem Verfahren keinerlei Entfernungsabschätzung stattfindet, ist die damit erzielbare Genauigkeit nur sehr eingeschränkt.

Ein weiteres konventionelles Verfahren ist die sogenannte gewichtete Schwerpunktmethode, die auch engl. weighted centroid localisation (WCL = Weighted Centroid Localisation) genannt wird. Hierbei empfängt wiederum ein Netzwerkknoten Positionsinformationen von umliegenden Netzwerk- oder Ankerknoten und bestimmt basierend auf den Positionsinformätionen einen gewichteten Schwerpunkt, d. h. die jeweiligen Positionen der Ankerknoten werden beispielsweise mit der Empfangsfeldstärke an dem Netzwerkknoten gewichtet. Dieses Verfahren weist insbesondere bei unregelmäßigen Anordnungen hohe Ungenauigkeiten auf, da eine Gruppe von eng beieinander liegenden Knoten ein zu starkes Gewicht erhält.

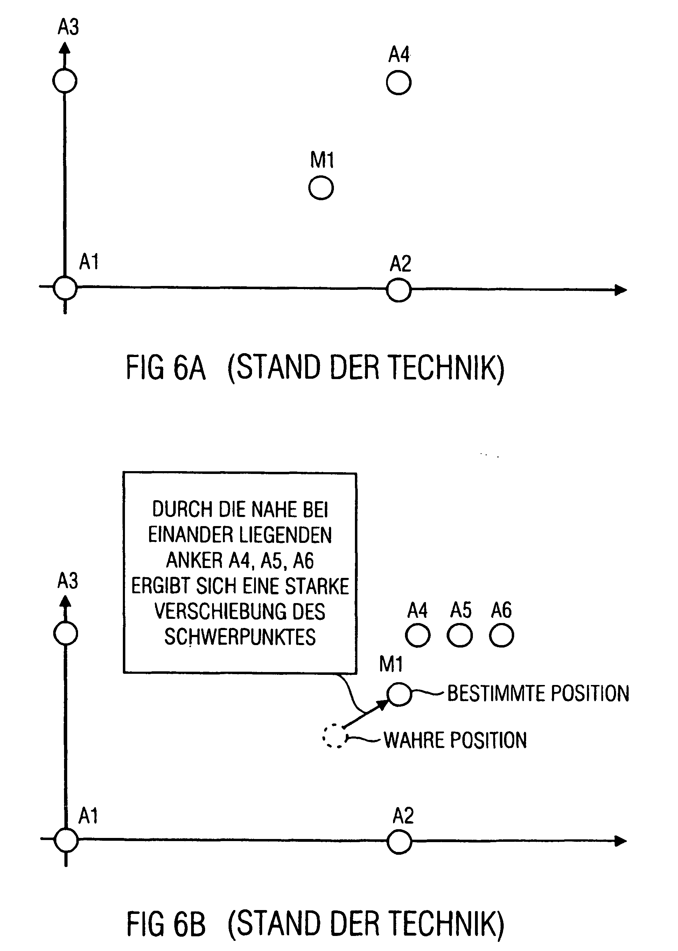

Dieser Effekt kann anhand der Fig. 6a und 6b näher erläutert werden. Die Fig. 6a zeigt einen Netzwerkknoten M1, dessen Position ermittelt werden soll. Die Ankerknoten A1-A4 sind um den Netzwerkknoten M1 herum angeordnet. Im Beispiel in der Fig. 6a wird davon ausgegangen, dass die Ankerknoten A1-A4 Positionsinformationen an den Netzwerkknoten M1 senden. Basierend auf den Empfangsfeldstärken der einzelnen Knoten A1-A4, sowie deren Position, kann der Netzwerkknoten M1 seine Position anhand der gewichteten Schwerpunktmethode bestimmen. Die Positionsbestimmung des Knotens M1 in der Fig. 6a funktioniert dabei relativ genau, da die Ankerknoten A1-A4 weitgehend regelmäßig um den Netzwerkknoten M1 herum angeordnet sind.

Die Fig. 6b zeigt ein weiteres Beispiel einer gewichteten Schwerpunktmethode. Die Fig. 6b zeigt wiederum einen Netzwerkknoten M1, dessen Position ermittelt werden soll. Die wahre Position des Netzwerkknotens M1 ist anhand eines gestrichelten Kreises in der Fig. 6b eingezeichnet. In der Fig. 6b ist der Netzwerkknoten M1 von sechs Ankerknoten A1-A6 umgeben. Es ist in der Fig. 6b zu erkennen, dass sich um den Ankerknoten A4 herum eine Häufung von Ankerknoten befindet, da hier die Ankerknoten A4 bis A6 relativ nahe beieinander liegen. Gemäß der obigen Erläuterung empfängt der Netzwerkknoten M1 die Positionsinformationen der Ankerknoten A1-A6 und bildet eine mit den jeweiligen Empfangsleistungen gewichtete Summe, um einen gewichteten Schwerpunkt zu ermitteln, gemäß WCL. Die auf diese Art ermittelte Position ist in der Fig. 6b als durchgezogener Kreis eingezeichnet, wobei zu erkennen ist, dass die Position durch die Häufung der Ankerknoten in der rechten oberen Ecke verzerrt wird, so dass nun eine hohe Ungenauigkeit auftritt.

Ein weiteres konventionelles Verfahren ist die zellulare Positionsbestimmung, wobei hier ein zellulares Kommunikationsnetz vorausgesetzt wird, auch engl. convex position estimation. Hierbei erfolgt eine Positionsbestimmung lediglich auf Basis einer bekannten Zellidentifikation (auch engl. cell ID), wobei dieses Verfahren eine hohe Ungenauigkeit aufweist, da keinerlei Entfernungsabschätzung Berücksichtigung findet und die Genauigkeit durch die Größe einer Zelle bestimmt wird.

Ein weiteres konventionelles Verfahren stellt die Triangulation dar, bei der durch trigonometrische Berechnung von beispielsweise drei oder mehr Senderpositionen eine Empfangsposition festgestellt wird. Oftmals sind die hier verwendeten Entfernungsabschätzungen zu ungenau, um eine genaue Triangulation und damit Positionsbestimmung zu ermöglichen.

Ein weiteres konventionelles Verfahren ist die sogenannte maximum likelyhood multilateration, also die Maximierung einer Wahrscheinlichkeit einer Positionsschätzung, wobei eine Fehlerminimierung einer Lösung eines linearen Gleichungssystems zur Positionsbestimmung verwendet wird. Dieses Verfahren ist sehr rechenaufwändig und benötigt ein relativ dichtes Netzwerk, das bedeutet, dass die jeweiligen Ankerknoten nicht zu weit entfernt sein dürfen, da diese Methode sonst fehleranfällig wird.

Eine Lokalisierung mit WCL zur Standortbestimmung mittels empfangener Ankerpositionen, die mit ihren Empfangsfeldstärken (auch engl. RSSI = Received Signal Strength Indicator) gewichtet werden, wie es anhand der Fig. 6a beschrieben wurde, erfordert für eine 2D-Positionsberechnung wenigstens drei nicht kolineare Anker. Werden von einem Netzwerkknoten zusätzliche redundante Ankerpositionen empfangen, so können diese zur Reduzierung von Ungenauigkeiten oder Schwankungen der RSSI-Werte verwendet werden. Beispielsweise können Störgrößen durch Mittelung von RSSI-Werten reduziert werden.

Gemäß der Fig. 6b kann ein Problem der Mehrfachgewichtung nah beieinander liegender Ankerknoten entstehen, was zusätzliche Ungenauigkeiten hervorruft. Grundsätzlich lässt sich WCL verwenden, da es eine geringe Komplexität aufweist und damit gut in eingebetteten Systemen implementiert werden kann, jedoch weist es gemäß obiger Beschreibung Nachteile hinsichtlich der Genauigkeit der Positionsbestimmung auf.

In Jan Blumenthal et al., "Precise Positioning with a Low Complexity Algorithm in Ad hoc Wireless Sensor Networks", PIK - Praxis der Informationsverarbeitung und Kommunikation, Juni 2005, wird ein WCL-Verfahren offenbart und es wird darauf eingegangen, dass Nachteile entstehen, wenn in einem bestimmten Winkelbereich Sender eng zueinander liegen, da dann das Ergebnis der Postionsbestimmung verfälscht wird. Es wird eine Fehlerverteilung bestimmt, die auf diesen Umstand zurückzuführen ist.

Es ist die Aufgabe der vorliegenden Erfindung, ein verbessertes Konzept zur Positionsbestimmung in Kommunikationsnetzen zu schaffen.

Diese Aufgabe wird gelöst durch eine Vorrichtung gemäß Anspruch 1 und ein Verfahren gemäß Anspruch 16. Gemäß einem Ausführungsbeispiel schafft die vorliegende Erfindung eine Vorrichtung zum Bestimmen einer Vorrichtungsposition mit einer Einrichtung zum Empfangen von Signalen einer Mehrzahl von Sendern. Ferner weist die Vorrichtung eine Einrichtung zum Bestimmen von Empfangsleistungen der Signale der Mehrzahl von Sendern und eine Einrichtung zum Bereitstellen von Senderpositionen der Sender basierend auf den Signalen der Mehrzahl von Sendern auf. Die Vorrichtung umfasst ferner eine Einrichtung zum Bestimmen einer ersten Position der Vorrichtung, basierend auf den Senderpositionen, wobei die Einrichtung zum Bestimmen der ersten Position ferner ausgebildet ist, um basierend auf der ersten Position und den Senderpositionen Senderrichtungen zu bestimmen, und um basierend auf den Senderrichtungen, den Senderpositionen und den Empfangsleistungen eine zweite Position der Vorrichtung zu bestimmen. Eine Abweichung zwischen der zweiten Position und der Vorrichtungsposition ist beispielsweise oder sogar wahrscheinlich geringer als eine Abweichung zwischen der ersten Position und der Vorrichtungsposition. Durch Iteratives Wiederholen des Vorganges kann die Abweichung im Mittel weiter verbessert werden.

Ausführungsbeispiele der vorliegenden Erfindung schaffen ferner ein Verfahren zum Bestimmen einer Vorrichtungsposition mit einem Schritt des Empfangens von Signalen einer Mehrzahl von Sendern und einem Schritt des Bestimmens von Empfangsleistungen der Signale der Mehrzahl von Sendern. Ferner umfasst das Verfahren einen Schritt des Bereitstellens von Senderpositionen der Sender basierend auf den Signalen der Mehrzahl von Sendern und einen Schritt des Bestimmens einer ersten Position basierend auf den Senderpositionen. Das Verfahren umfasst ferner einen Schritt des Bestimmens von Senderrichtungen basierend auf der ersten Position und den Senderpositionen, sowie einen Schritt des Bestimmens einer zweiten Position basierend auf den Senderrichtungen, den Senderpositionen und den Empfangsleistungen.

Ausführungsbeispielen der vorliegenden Erfindung liegt der Kerngedanke zugrunde, dass basierend auf einer ersten ungenaueren Position ermittelt werden kann, in welcher Richtung sich welcher Sender befindet. Dadurch lassen sich Häufungspunkte, wie beispielsweise in der Fig. 6b gezeigt, ermitteln und bei einer Bestimmung einer zweiten Position derart berücksichtigen, dass die Genauigkeit der zweiten Position gegenüber der Ersten zunehmen kann. Ausführungsbeispiele können ferner zusätzliche Schritte aufweisen, in denen die zweite Position nun als Ausgangspunkt zur Ermittlung von Senderrichtungen dient, worauf hin eine genauere Bestimmung der Senderrichtungen erfolgen kann, was wiederum eine genauere Bestimmung der Vorrichtungsposition erlaubt usw.

Ausführungsbeispiele können demnach beispielsweise das WCL-Verfahren verwenden, wobei diesem Verfahren ein Schritt vorgeschaltet ist, der die umgebenden Gruppen derart gruppieren und zusammenfassen kann, dass sich eine verbesserte Genauigkeit einer Positionsbestimmung ergibt. Ausführungsbeispiele können beispielsweise eng beieinander liegende Ankerknoten zu einem virtuellen Ankerknoten oder Sender zusammenfassen, wobei beispielsweise der WCL-Algorithmus dann basierend auf den virtuellen Ankerknoten eine entsprechend genauere Position liefern kann.

Ausführungsbeispiele können zunächst eine Anfangsposition oder eine erste Position bestimmen, beispielsweise durch Ermitteln eines Schwerpunktes oder durch die gewichtete Schwerpunktmethode. Hierbei können alle empfangenen Positionen berücksichtigt werden. Die so ermittelte Position gilt nun als Ausgangspunkt für eine verbesserte Positionsbestimmung, die beispielsweise in zwei Phasen, eine Auswahlphase und eine Ersetzungsphase, aufgeteilt werden kann. Diese beiden Phasen können wiederholt angewendet werden, wobei eine zusätzliche Genauigkeit bei der Positionsbestimmung erreicht werden kann. Eine Bewertungsfunktion kann dabei Verbesserungen detektierbar machen und somit ein Abbruchkriterium für eine Iteration implementieren.

Ausführungsbeispiele der vorliegenden Erfindung werden nachfolgend anhand der beiliegenden Figuren näher beschrieben. Es zeigen

Fig. 1     ein Ausführungsbeispiel einer Vorrichtung zum Bestimmen einer Vorrichtungsposition;

Fig. 2     ein Ausführungsbeispiel eines Ablaufdiagramms ei- nes Verfahrens zur Bestimmung einer Vorrichtungs- position;

Fig. 3     ein weiteres Ausführungsbeispiel eines Ablaufdia- gramms eines Verfahrens zur Bestimmung einer Vor- richtungsposition;

Fig. 4     ein Ausführungsbeispiel eines Netzwerkknotens;

Fig. 5a     ein Ausführungsbeispiel einer Bestimmung eines virtuellen Ankers oder virtuellen Senders;

Fig. 5b     ein Ausführungsbeispiel einer Bestimmung eines virtuellen Ankers oder virtuellen Senders;

Fig. 6a     ein Beispiel eines Szenarios zur Bestimmung der Position eines Netzwerkknotens; und

Fig. 6b     eine Illustration zur Verdeutlichung der Verfäl- schung der Positionsbestimmung durch Häufung von Ankerknoten.

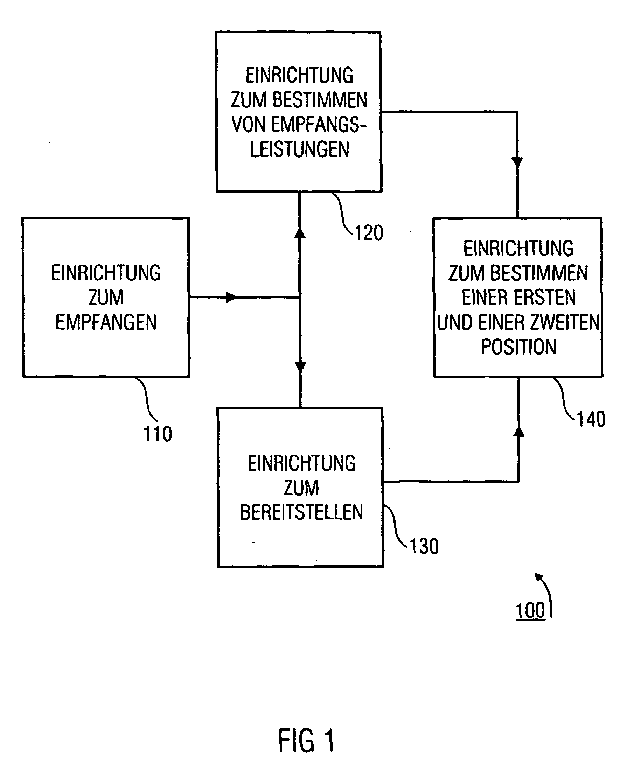

Fig. 1 zeigt ein Ausführungsbeispiel einer Vorrichtung zum Bestimmen einer Vorrichtungsposition. Die Vorrichtung 100 umfasst eine Einrichtung 110 zum Empfangen von Signalen einer Mehrzahl von Sendern und eine Einrichtung 120 zum Bestimmen von Empfangsleistungen der Signale der Mehrzahl von Sendern. Die Vorrichtung umfasst ferner eine Einrichtung 130 zum Bereitstellen von Senderpositionen der Sender, basierend auf den Signalen der Mehrzahl von Sendern. Ferner umfasst die Vorrichtung 100 eine Einrichtung 140 zum Bestimmen einer ersten Position der Vorrichtung 100, basierend auf den Senderpositionen, wobei die Einrichtung 140 zum Bestimmen der ersten Position ferner ausgebildet ist, um basierend auf der ersten Position und den Senderpositionen Senderrichtungen zu bestimmen und um basierend auf den Senderrichtungen, den Senderpositionen und den Empfangsleistungen eine zweite Position der Vorrichtung 100 zu bestimmen, wobei eine Abweichung zwischen der zweiten Position und der Vorrichtungsposition geringer ist, als eine Abweichung zwischen der ersten Position und der Vorrichtungsposition..

In Ausführungsbeispielen kann die Einrichtung 140 zum Bestimmen der ersten und der zweiten Position ausgebildet sein, um basierend auf der zweiten Position und den Senderpositionen verbesserte Senderrichtungen zu bestimmen und um basierend auf den verbesserten Senderrichtungen eine verbesserte Position zu bestimmen, wobei eine Abweichung zwischen der Vorrichtungsposition und der verbesserten Position geringer als die Abweichung zwischen der zweiten Position und der Vorrichtungsposition sein kann und beispielsweise mit - bei gleicher Gewichtung der möglichen Konstellationen von Eingangsparametern - höherer bzw. überdurchschnittlicher Wahrscheinlichkeit auch ist.

In Ausführungsbeispielen kann die Einrichtung 140 zum Bestimmen der ersten und der zweiten Position ferner ausgebildet sein, um so lange verbesserte bzw. weitere Senderrichtungen basierend auf verbesserten bzw. weiteren Positionen und nachfolgend wiederum verbesserte bzw. wiederum weitere Positionen basierend auf den verbesserten bzw. wiederum weitere Senderrichtungen zu bestimmen, bis ein Abbruchkriterium erfüllt ist. In einem solchen Ausführungsbeispiel kann ein iteratives Verfahren zum Einsatz kommen. Ausführungsbeispiele können hierbei ausnutzen, dass basierend auf verbesserten Positionen der vorhergehenden Iteration eine genauere Bestimmung der Senderrichtungen erfolgen kann. Sind die Senderrichtungen genauer bestimmt, so kann gegebenenfalls eine bessere Auswahl oder Zusammenfassung relevanter Ankerknoten oder Sender erfolgen. Die Einrichtung 140 zum Bestimmen der ersten und der zweiten Position kann ferner ausgebildet sein, um basierend auf den Senderrichtungen und den Empfangsleistungen Sender zu virtuellen Sendern mit virtuellen Senderpositionen und virtuellen Empfangsleistungen zusammen zu fassen, bzw. zu bestimmen. Hierbei können Ausführungsbeispiele im Laufe der Iteration immer mehr Sender oder auch virtuelle Sender zu virtuellen Sendern zusammenfassen, so dass eine Häufung von Sendern bzw. virtuellen Sendern in einer bestimmten Richtung immer mehr abnimmt, wobei somit eine immer genauere Positionsbestimmung ermöglicht wird. In Ausführungsbeispielen kann somit iterativ eine Verfälschung einer Positionsbestimmung verringert werden. Dabei muss nicht notwendigerweise jede Iteration stets eine Verbesserung zum unmittelbar vorhergehenden Iterationsschritt darstellen. Vielmehr kann es sein, dass eine in einer Iteration erhaltene neue Position in Wirklichkeit eine etwas größere Entfernung von der korrekten Position aufweist als die Position, von der die aktuelle Iteration ausging. Im Mittel über die Iterationen aber wird eine Verbesserung erzielt werden, deren Verlauf über die Iterationen hinweg eine Sättigung erreichen kann.

In Ausführungsbeispielen kann die Einrichtung 140 zum Bestimmen der ersten und zweiten Position ferner ausgebildet sein, um so lange Sender und virtuelle Sender zu virtuellen Sendern zusammenzufassen, bis sich die Senderrichtungen der Sender und der virtuellen Sender untereinander um Winkel unterscheiden, die größer als ein vordefinierter Mindestwinkel sind oder eine Mindestanzahl von Sendern und virtuellen Sendern unterschritten wird, wobei jeweils Sender oder virtuelle Sender zum Zusammenfassen ausgewählt werden können, deren Senderrichtungen sich um weniger als den Mindestwinkel unterscheiden. Die Mindestwinkel können dabei beispielsweise Werte von 10°, 20°, 30°, 60°, 120° usw. einnehmen. Eine Mindestanzahl von Sendern oder virtuellen Sendern könnte beispielsweise 2, 3, 4, 5, 6, usw. sein.

In Ausführungsbeispielen kann die Einrichtung 140 zum Bestimmen der ersten und der zweiten Position ausgebildet sein, um eine Position eines virtuellen Senders nach den Koordinaten $x_v$ und $y_v$ gemäß

$$x_v = \frac{\Delta_{i+1} \cdot r_{i+1} \cdot x_{i+1} + \Delta_{i-1} \cdot r_i \cdot x_i}{\Delta_{i+1} \cdot r_{i+1} + \Delta_{i-1} \cdot r_i} \, ,$$

$$y_v = \frac{\Delta_{i+1} \cdot r_{i+1} \cdot y_{i+1} + \Delta_{i-1} \cdot r_i \cdot y_i}{\Delta_{i+1} \cdot r_{i+1} + \Delta_{i-1} \cdot r_i} \, ,$$

$$r_v = \frac{\Delta_{i+1} \cdot r^2_{i+1} + \Delta_{i-1} \cdot r_i^2}{\Delta_{i+1} \cdot r_{i+1} + \Delta_{i-1} \cdot r_i} \, ,$$

mit

| | |
|---|---|
| $\Delta_{i-1}, \Delta_{i+1}$ | benachbarte Winkel-Differenzen, |
| $(x_v, y_v)$ | virtuelle Anker-/Senderposition, |
| $(x_i, y_i), (x_{i+1}, y_{i+1})$ | ausgewählte Anker-/Sender- (virtuelle Senderpositionen, |
| $r_v, r_i, r_{i+1}$ | RSSI Werte, |

zu bestimmen. Ferner kann die Einrichtung (140) zum Bestimmen der ersten und der zweiten Position ausgebildet sein, um als eine Bewertungsfunktion V einen Durchschnittswert der Abweichungsquadrate der Winkeldifferenzen der Senderichtungen der Sender oder der virtuellen Sender zu bestimmen, gemäß

$$\delta = \frac{1}{2} \cdot \frac{360}{n}$$

$$V = \frac{1}{n} \sum_{i=1}^{n} (\Delta_i - \delta)^2 \, ,$$

wobei n die Anzahl der Sender oder virtuellen Sender und $\Delta_i$ die Winkel zwischen benachbarten Sendern bzw. virtuellen Sendern sind, und abzubrechen, falls der Durchschnittswert eine bestimmte Anzahl an Iterationsschritte lang durchweg größer wird bzw. ansteigt oder zumindest der Durchschnittswert eine Tendenz zeigt nicht mehr zu fallen, oder zusätzlich oder alternativ abzubrechen, falls der Wert eine vorbestimmte Schwelle unterschreitet.

In Ausführungsbeispielen kann die Einrichtung 130 zum Bereitstellen ferner ausgebildet sein, um die Senderpositionen der Sender basierend auf den Empfangsleistungen und der Empfangsrichtungen bereitzustellen. Die Einrichtung 130 zum Bereitstellen kann dabei ferner ausgebildet sein, um die Empfangsrichtung basierend auf Empfangssignalen einer Mehrzahl von Antennen bereitzustellen. Hier können in Ausführungsbeispielen Antennenfelder, sogenannten Antennen-Arrays, oder andere Richtantennen zum Einsatz kommen. Mit Hilfe von Antennenfeldern, die beispielsweise in zirkularer, linearer, triangularer oder anderen bekannten geometrischen Formen vorkommen können, lässt sich beispielsweise die Einfallsrichtung von Signalen einzelner Sender schätzen, die dann in Ausführungsbeispielen als Senderrichtungen verwendet werden können. Die Einrichtung 130 zum Bereitstellen kann basierend auf einer solchen Schätzung sowohl Senderpositionen, durch Schätzung der Richtung und Distanz über die Funkfelddämpfung, als auch die Senderrichtungen direkt bereitstellen.

In anderen Ausführungsbeispielen kann die Einrichtung 130 zum Bereitstellen ausgebildet sein, um die Senderpositionen durch Detektion von Positionsinformation aus den Signalen der Mehrzahl von Sendern zu ermitteln. Hierbei könnte beispielsweise ein Sender mit einer GPS-Einrichtung (GPS = Global Positioning System) ausgerüstet sein, um seine Position zu bestimmen. Die Ausrüstung mit einem GPS-Modul ist hier beispielhaft zu verstehen, prinzipiell sind alle Verfahren zur Bestimmung einer Position denkbar, insbesondere auch ein stationäres oder quasistationäres Szenario, wobei ein Sender nicht mehr mobil ist, sondern eine feste, unveränderliche bzw. langsam veränderliche Position aufweist. Ein Sender könnte seine Position demnach als Information in einem Sendesignal an die Einrichtung 130 zum Bereitstellen schicken, welche durch Detektion selbiger Information die Position eines Senders bestimmen kann. Ferner kann die Einrichtung 130 zum Bereitstellen die empfangene Feldstärke bzw. die Empfangsleistung berücksichtigen, um aus einer bekannten Sendeleistung und einer bekannten Funkfelddämpfung einen Schätzwert für die Entfernung des Senders zu berücksichtigen.

In Ausführungsbeispielen kann die Einrichtung 140 zum Bestimmen der ersten und der zweiten Position ferner ausgebildet sein, um Positionen durch Ermitteln eines Schwerpunktes oder durch Ermitteln eines durch die Empfangsleistung gemittelten Schwerpunktes zwischen den Sendern zu bestimmen. Ferner kann die Einrichtung 140 zum Bestimmen der ersten und der zweiten Position ausgebildet sein, um Positionen durch zellulare Positionsbestimmung, durch trigonometrische Berechnung der Position oder durch Fehlerminimierung eines Gleichungssystems zu bestimmen.

In Ausführungsbeispielen kann die Einrichtung 140 zum Bestimmen der ersten und der zweiten Position ferner ausgebildet sein, um eine räumliche Nähe der Sender mit einem Abstand zwischen den Sendern in Bezug zu bringen, um ein Kriterium zur Zusammenfassung von Sendern zu erhalten. Ferner können Symmetrien der Sender untereinander bei der Bestimmung der Position oder bei der Zusammenfassung berücksichtigt werden. In einer Bewertungsfunktion können ferner die Empfangsleistungen verschiedener Sender berücksichtigt werden.

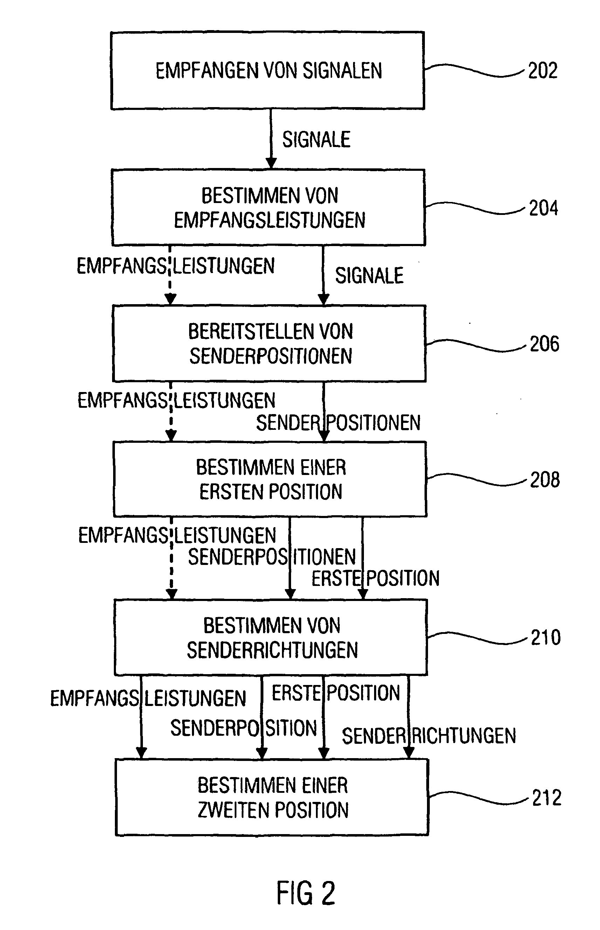

Fig. 2 zeigt ein Ablaufdiagramm eines Verfahrens zum Bestimmen einer Vorrichtungsposition. Ein Schritt 202 des Empfangens von Signalen einer Mehrzahl von Sendern wird gefolgt von einem Schritt 204 des Bestimmens von Empfangsleistungen, basierend auf den Signalen der Mehrzahl von Sendern. Nachfolgend erfolgt ein Schritt 206 des Bereitstellens von Senderpositionen der Sender, basierend auf den Signalen der Mehrzahl von Sendern. In Ausführungsbeispielen kann im Schritt 206 auch eine Berücksichtigung der Empfangsleistungen erfolgen, was durch einen gestrichelten Pfeil angedeutet ist. In einem Schritt 208 erfolgt das Bestimmen einer ersten Position basierend auf den Senderpositionen, wobei optional ebenfalls die Empfangsleistungen berücksichtigt werden können. In einem Schritt 210 können die Senderrichtungen bestimmt werden, basierend auf den Senderpositionen und der ersten Position, wobei auch hier optional die Empfangsleistungen Berücksichtigung finden können. In einem letzten Schritt 212 wird eine zweite Position bestimmt, basierend auf den Senderrichtungen, den Senderpositionen und den Empfangsleistungen, wobei eine Abweichung zwischen der zweiten Position und der Vorrichtungsposition geringer ist als eine Abweichung zwischen der ersten Position und der Vorrichtungsposition.

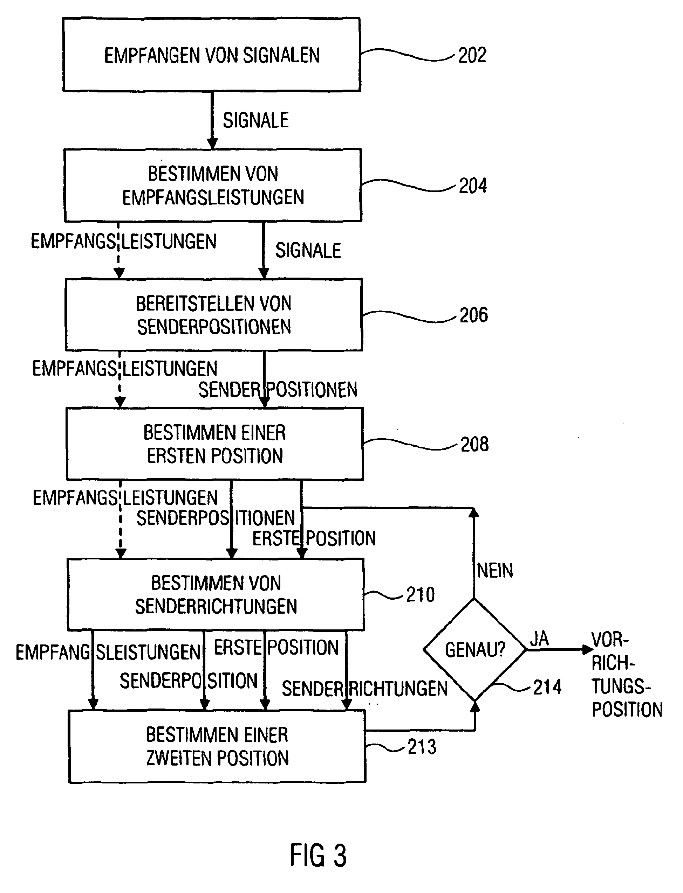

In Ausführungsbeispielen kann das Verfahren eine Schleife aufweisen, wobei der Schritt 212 des Bestimmens der zweiten Position durch einen Schritt 213 des Bestimmens einer verbesserten Position ersetzt werden kann. Die Fig. 3 zeigt ein Ausführungsbeispiel eines Ablaufdiagramms eines solchen Verfahrens. Dabei erfolgt in einem Schritt 214 eine Genauigkeitsprüfung des Ergebnisses. Liegt eine gewisse Genauigkeit noch nicht vor, so kann die verbesserte Position aus Schritt 213 dem Schritt 210 des Bestimmens von Senderrichtungen als nunmehr erste Position zugeführt werden, wobei verbesserte Senderrichtungen bestimmt werden können. Basierend auf den verbesserten Senderrichtungen kann dann wiederum in dem Schritt 213 eine verbesserte Position bestimmt werden. Ist die erwünschte Genauigkeit erreicht, so wird in Schritt 214 die jeweilige verbesserte Position als Vorrichtungsposition ausgegeben. Die beschriebene Schleife kann dann solange durchlaufen werden, bis ein jeweiliges Abbruchkriterium erfüllt ist. Ein Abbruchkriterium kann beispielsweise die Varianz der Winkel zwischen den verbleibenden virtuellen Sendern bzw. Sendern darstellen. Da eine Gleichverteilung ein optimales Ergebnis liefern würde, kann die Varianz nach oben abgeschätzt werden, das heißt die Schleife kann beispielsweise abgebrochen werden, wenn die Varianz der verbleibenden Winkel einen gewissen Wert unterschreitet.

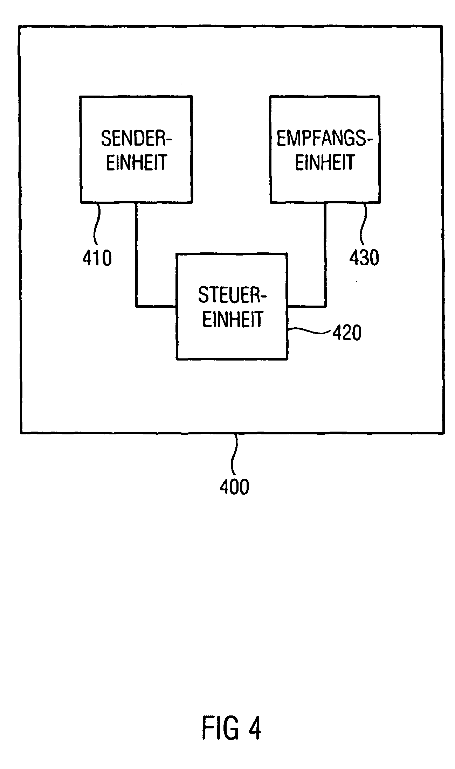

Die Fig. 4 zeigt beispielhaft einen Netzwerkknoten 400, mit einer Sendeeinheit 410, einer Steuereinheit 420 und einer Empfangseinheit 430. Ausführungsbeispiele einer Vorrichtung 100 können beispielsweise in einen Netzwerkknoten 400 integriert sein, wobei die Sendeeinheit 410 und die Steuereinheit 420 optional sein können. Die involvierten Sender können ferner gemäß der Fig. 4 ausgerüstet sein, wobei dann die Empfangseinheit 430 und die Steuereinheit 420 optional sein können. Ausführungsbeispiele kommen demnach mit einer Empfangseinheit 430 aus, wobei die Sender, deren Senderposition ermittelt wird, lediglich eine Sendeeinheit 410 zum Bereitstellen ihrer Senderpositionen benötigen.

Ausführungsbeispiele lassen sich nach zwei Phasen, einer Auswahlphase und einer Ersetzungsphase, unterteilen. In der Auswahlphase wird nach Ankerknoten bzw. Sendern oder virtuellen Sendern gesucht, die besonders günstig zu einander liegen. Für jeden Sender lässt sich ein Richtungswinkel ausgehend von der Anfangsposition oder ersten Position bestimmen. Dabei sind verschiedene Ausführungsbeispiele denkbar. Beispielsweise können die Sender ihre Positionen explizit in den Signalen übermitteln, wie beispielsweise ihre GPS-Koordinaten. Generell sind jegliche Koordinaten denkbar, die ein Sender auch durch andere Mechanismen bestimmen kann. Insbesondere bei stationären Sendern könnten deren Koordinaten fest vorgegeben sein. Eine andere Möglichkeit wäre durch den Einsatz von sogenannten Richtantennen oder Antennenfeldern gegeben. Hierbei kommen Antennen zum Einsatz, die eine vorgegebene Richtcharakteristik aufweisen. Dies kann durch entsprechende Antennengeometrien erreicht werden oder durch eine Anordnung mehrerer Antennen. Hierbei sind zirkulare, trianguläre, lineare und prinzipiell beliebige Geometrien denkbar, die sich realisieren lassen, und auf deren Basis eine Richtungs- oder Winkelschätzung durchgeführt werden kann.

In Ausführungsbeispielen können die Sender oder Ankerknoten dann nach ihren Winkeln sortiert werden, woraufhin sie der Reihenfolge nach durchlaufen werden können und die Differenzen der Winkel zwischen benachbarten Ankern berechnet werden können. In Ausführungsbeispielen wird dann beispielsweise eine minimale oder eine eine Schranke unterschreitende Winkeldifferenz festgestellt, und die beiden Sender, virtuellen Sender bzw. Ankerknoten, die den besagten Winkel zwischen einander aufweisen, für eine Zusammenfassung zu einem virtuellen Knoten bzw. Sender ausgewählte.

Die Ersetzungsphase hat nun zum Ziel, die minimale Winkel-differenz, oder auch eine andere Winkeldifferenz, zu beseitigen, indem zwei ausgewählte Ankerknoten, Sender oder virtuelle Sender, durch einen virtuellen Sender bzw. Ankerknoten ersetzt werden. Dieser virtuelle Ankerknoten hat wiederum eine Senderposition und eine Empfangsleistung, wie beispielsweise einen RSSI-Wert. Die Position liegt dann zwischen den beiden ausgewählten Sendern bzw. Ankerknoten, die Empfangsleistung bzw. der RSSI-Wert liegt zwischen den Empfangsleistungen bzw. RSSI-Werten der ausgewählten Ankerknoten, Sendern oder virtuellen Sendern. Die Werte können dann in einem Ausführungsbeispiel im Verhältnis der benachbarten Winkel-Differenzen und der RSSI-Werte der ausgewählten Ankerknoten gewichtet werden. Dadurch können die benachbarten Winkel-Differenzen des virtuellen Senders oder Ankerknotens möglichst gleich werden, wobei die RSSI-Werte berücksichtigt werden können.

Die Berechnung kann in einem Ausführungsbeispiel nach folgender Formel erfolgen:

$$x_v = \frac{\Delta_{i+1} \cdot r_{i+1} \cdot x_{i+1} + \Delta_{i-1} \cdot r_i \cdot x_i}{\Delta_{i+1} \cdot r_{i+1} + \Delta_{i-1} \cdot r_i},$$

$$y_v = \frac{\Delta_{i+1} \cdot r_{i+1} \cdot y_{i+1} + \Delta_{i-1} \cdot r_i \cdot y_i}{\Delta_{i+1} \cdot r_{i+1} + \Delta_{i-1} \cdot r_i},$$

$$r_v = \frac{\Delta_{i+1} \cdot r^2_{i+1} + \Delta_{i-1} \cdot r_i^2}{\Delta_{i+1} \cdot r_{i+1} + \Delta_{i-1} \cdot r_i},$$

mit

| | |
|---|---|
| $\Delta_{i-1}, \Delta_{i+1}$ | benachbarte Winkel-Differenzen, |
| $(x_v, y_v)$ | virtuelle Anker-/Senderposition, |
| $(x_i, y_i), (x_{i+1}, y_{i+1})$ | ausgewählte Anker-/Sender- (virtuelle Senderpositionen, |
| $r_v, r_i, r_{i+1}$ | RSSI Werte. |

In Ausführungsbeispielen kann, um ein Abbruchskriterium zu schaffen, eine Bewertungsfunktion zum Einsatz kommen. Eine Bewertungsfunktion ist beispielsweise die Verbesserung einer bestimmten Position nach einem oben beschriebenen Durchlauf von einer Auswahlphase und einer Ersetzungsphase. Insgesamt kann es für jeden redundanten Anker einen Durchlauf geben, wobei in jedem Durchlauf ein Sender bzw. Ankerknoten durch Zusammenfassung entfernt wird. Ziel dieser Iteration ist es beispielsweise einen Schwerpunkt zu bestimmen, also die Richtung der Ankerknoten oder Sender möglichst gleichverteilt um die eigene Position, das heißt die Vorrichtungsposition, zu legen. In einem optimalen Fall wäre, wenn alle Winkel-Differenzen oder RSSI-Werte gleich groß wären, die Vorrichtungsposition gleich dem Schwerpunkt zwischen den verbleibenden Sendern und virtuellen Sendern. In einem Ausführungsbeispiel bietet sich demnach als Bewertungsfunktion die Varianz V der Winkel-Differenzen an. Es lässt sich der Durchschnitt der Abweichungsquadrate der Winkel-Differenzen zu dem Erwartungswert $\delta = \frac{1}{2} \cdot \frac{360}{n}$, wobei n gleich der Anzahl von Sendern bzw. virtuellen Sendern ist, bilden

$$\delta = \frac{1}{2} \cdot \frac{360}{n}$$

$$V = \frac{1}{n}\sum_{i=1}^{n}(\Delta_i - \delta)^2 \, .$$

Beispielsweise kann nun durch den Vergleich der Varianzwerte vor und nach einem Durchlauf entschieden werden, ob die Vorrichtungsposition mit WCL genauer wird oder nicht. Ebenso kann die Iteration des Refinements bei einer ausreichend günstigen Verteilung der Anker bzw. Sender und virtueller Sender abgebrochen werden.

In Ausführungsbeispielen können in der Ersetzungsphase auch andere Ersetzungsstrategien zum Einsatz kommen, wodurch eine Anpassung an das jeweilige Einsatzszenario ermöglicht wird. Beispielsweise könnte die räumliche Nähe einzelner Anker zueinander mit dem Abstand zu der Vorrichtung in Bezug gebracht werden, um so eine Gruppierung zu erreichen. In weiteren Ausführungsbeispielen ist es denkbar, in der Auswahlphase bzw. in der Bewertungsfunktion Ankersymmetrien, das heißt Sendersymmetrien und virtuelle Sendersymmetrien, zu berücksichtigen. Ferner könnte eine Bewertungsfunktion in einem Ausführungsbeispiel auch die RSSI-Werte, also die Empfangsleistungen, berücksichtigen.

Generell lässt sich feststellen, dass Ausführungsbeispiele Verfahren zur Positionsbestimmung optimieren, wobei ein lediglich geringer Zusatzaufwand für beispielsweise das WCL-Verfahren betrieben wird und die Genauigkeit jedoch erheblich erhöht werden kann, da eine Verschiebung der mit WCL berechneten Position in Richtung dichtliegender Sender oder Ankerknoten effektiv vermieden werden kann. In anderen Ausführungsbeispielen ist es ferner denkbar, mehrere Ankerknoten oder Sender vorsätzlich so zu platzieren, dass aus einer bestimmten Vorzugsrichtung eine Redundanz durch Gruppierung von Sendern entsteht. Ausführungsbeispiele erlauben somit eine Mittelung der ungenauen und schwankenden RSSI-Werte bzw. Empfangsleistungen. Über die Bewertungsfunktion lässt sich ein Maß für die Genauigkeit der Position ermitteln, woraus eine effektive Iterationsschleife entstehen kann. Ausführungsbeispiele kommen ferner ohne zusätzliche Nachrichten zwischen Sendern und der Vorrichtung aus.

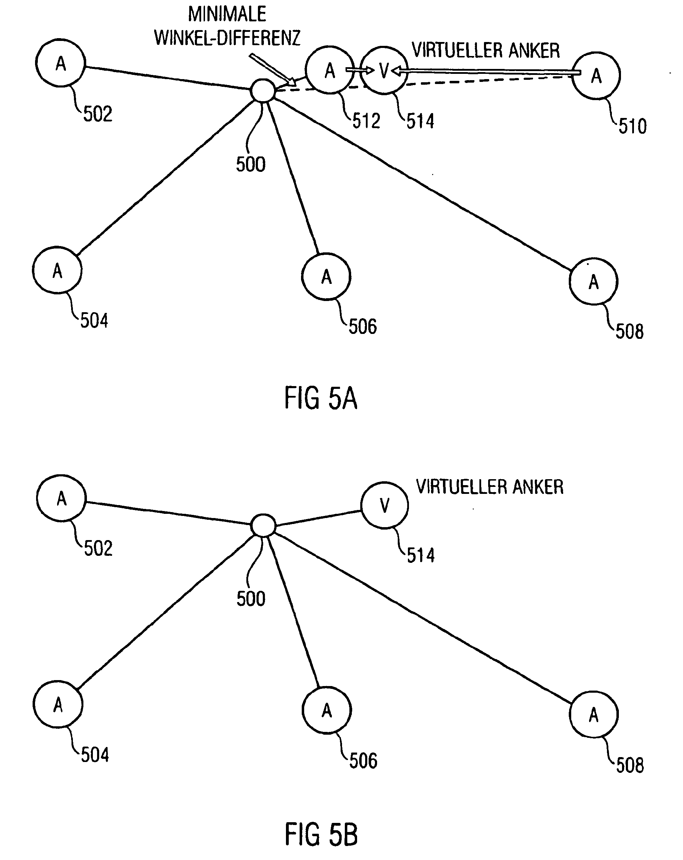

Fig. 5a erläutert noch einmal ein Ausführungsbeispiel eines Verfahrens zur Positionsbestimmung. Fig. 5a zeigt einen Netzwerkknoten oder eine Vorrichtung zur Positionsbestimmung 500, die von mehreren Ankerknoten 502, 504, 506, 508, 510 und 512 umgeben ist. Wie sich in der Fig. 5a erkennen lässt, liegt eine minimale Winkel-Differenz zwischen den Ankerknoten 510 und 512 vor. Ausführungsbeispiele können nun die Ankerknoten oder Sender 510 und 512 zu einem virtuellen Anker oder virtuellen Sender 514 zusammenfassen, wie es in der Fig. 5a durch die beiden Pfeile angedeutet ist. Die Fig. 5b zeigt das resultierende Szenario, in dem nunmehr die beiden Ankerknoten bzw. Sender 510 und 512 durch den virtuellen Anker oder Sender 514 ersetzt worden sind. Es lässt sich erkennen, dass Ausführungsbeispiele somit eine verbesserte Verteilung der Winkel-Differenzen der Sender, welche an der Positionsbestimmung beteiligt sind, erreichen. Fig. 5b zeigt das gleiche Szenario wie Fig. 5a, das heißt die anderen Ankerknoten bzw. Sender 502, 504, 506, und 508 gleichen denen aus Fig. 5a.

Ausführungsbeispiele realisieren einen Vorteil bei der Positionsbestimmung einer Vorrichtung, durch Inbezugnahme einer Winkelverteilung von Ankerknoten oder Sendern, die zur Bestimmung der Position herangezogen werden. Dabei ermitteln Ausführungsbeispiele zunächst die Senderrichtungen jener beteiligter Sender, um eine erste, gröbere Positionsbestimmung durchzuführen. Basierend auf dieser ersten Position können nun die Winkel und Winkel-Differenzen zwischen den Einfallsrichtungen der Signale der einzelnen Beteiligten Sender ermittelt werden, wobei nun eine Häufung von Sendern in einer bestimmten Richtung berücksichtigt werden kann, wodurch wiederum eine genauere Bestimmung einer zweiten Position möglich wird.

Insbesondere wird darauf hingewiesen, dass abhängig von den Gegebenheiten das erfindungsgemäße Schema auch in Software implementiert sein kann. Die Implementation kann auf einem digitalen Speichermedium insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogrammprodukt auf einem Computer abläuft.

Bezugszeichenliste

| | |
|---|---|
| 100 | Vorrichtung zum Bestimmen einer Vorrichtungsposition |
| 110 | Einrichtung zum Empfangen |
| 120 | Einrichtung zum Bestimmen von Empfangsleistungen |
| 130 | Einrichtung zum Bereitstellen |
| 140 | Einrichtung zum Bestimmen einer ersten und einer zwei- ten Position |
| 202 | Empfangen von Signalen |
| 204 | Bestimmen von Empfangsleistungen |
| 206 | Bereitstellen von Senderpositionen |
| 208 | Bestimmen einer ersten Position |
| 210 | Bestimmen von Senderrichtungen |
| 212 | Bestimmen einer zweiten Position |
| 213 | Bestimmen einer verbesserten Position |
| 214 | Genauigkeitsprüfung |
| 400 | Netzwerksknoten |
| 410 | Sendeeinheit |
| 420 | Steuereinheit |
| 430 | Empfangseinheit |
| 500 | Vorrichtung zur Positionsbestimmung |
| 502 | Ankerknoten oder Sender bzw. virtueller Sender |
| 504 | Ankerknoten oder Sender bzw. virtueller Sender |
| 506 | Ankerknoten oder Sender bzw. virtueller Sender |
| 508 | Ankerknoten oder Sender bzw. virtueller Sender |
| 510 | Ankerknoten oder Sender bzw. virtueller Sender |
| 512 | Ankerknoten oder Sender bzw. virtueller Sender |
| 514 | Virtueller Sender |

**Patentansprüche**

1. Vorrichtung (100) zum Bestimmen einer Vorrichtungsposition, mit folgenden Merkmalen:

   einer Einrichtung (110) zum Empfangen von Signalen einer Mehrzahl von Sendern;

einer Einrichtung (120) zum Bestimmen von Empfangsleistungen der Signale der Mehrzahl von Sendern;

einer Einrichtung (130) zum Bereitstellen von Senderpositionen der Sender, basierend auf den Signalen der Mehrzahl von Sendern; und

einer Einrichtung (140) zum Bestimmen einer ersten Position der Vorrichtung (100) basierend auf den Senderpositionen, **dadurch gekennzeichnet, dass** die Einrichtung (140) zum Bestimmen der ersten Position ferner ausgebildet ist, um

basierend auf der ersten Position und den Senderpositionen Senderrichtungen zu bestimmen,

basierend auf den Senderrichtungen Sender mit minimaler oder eine Schranke unterschreitender Winkeldifferenz zu einem virtuellen Sender mit einer virtuellen Senderposition, die zwischen den Sendern mit minimaler oder die Schranke unterschreitender Winkeldifferenz liegt, und einer virtuellen Empfangsleistung, die zwischen den Empfangsleistungen der Signale derselben liegt, zusammenzufassen, und

basierend auf der virtuellen Senderposition und der virtuellen Empfangsleistung der virtuellen Sender und den Senderpositionen und den Empfangsleistungen der verbliebenen Sender eine zweite Position der Vorrichtung (100) zu bestimmen.

2.  Vorrichtung (100) gemäß Anspruch 1, bei der die Einrichtung (140) zum Bestimmen der ersten und der zweiten Position ausgebildet ist, um basierend auf der zweiten Position und der Senderpositionen neue Senderrichtungen zu bestimmen und um basierend auf den neuen Senderrichtungen eine weitere Position zu bestimmen, wobei eine Abweichung zwischen der Vorrichtungsposition und der weiteren Position geringer als die Abweichung zwischen der ersten Position und der Vorrichtungsposition ist.

3.  Vorrichtung (100) gemäß Anspruch 2, bei der die Einrichtung (140) zum Bestimmen der ersten und der zweiten Position ferner ausgebildet ist, um so lange neue Senderrichtungen basierend auf weiteren Positionen und nachfolgend wiederum weitere Positionen basierend auf wiederum neuen Senderrichtungen zu bestimmen, bis ein Abbruchkriterium erfüllt ist.

4.  Vorrichtung (100) gemäß einem der Ansprüche 1 bis 3, bei der die Einrichtung (140) zum Bestimmen der ersten und der zweiten Position ausgebildet ist, um so lange Sender oder virtuelle Sender zu virtuellen Sendern zusammenzufassen, bis sich die Senderichtungen der Sender und der virtuellen Sender untereinander um Winkel unterscheiden, die größer als ein vordefinierter Mindestwinkel sind oder eine Mindestanzahl von Sendern und virtuellen Sendern unterschritten wird, wobei jeweils Sender oder virtuelle Sender zum Zusammenfassen ausgewählt werden, deren Senderrichtungen sich um weniger als den Mindestwinkel unterscheiden.

5.  Vorrichtung (100) gemäß Anspruch 4, bei der die Einrichtung (140) zum Bestimmen der ersten und der zweiten Position ausgebildet ist, um eine Position eines virtuellen Senders nach den Koordinaten $x_v$ und $y_v$ gemäß

$$x_v = \frac{\Delta_{i+1} \cdot r_{i+1} \cdot x_{i+1} + \Delta_{i-1} \cdot r_i \cdot x_i}{\Delta_{i+1} \cdot r_{i+1} + \Delta_{i-1} \cdot r_i} ,$$

$$y_v = \frac{\Delta_{i+1} \cdot r_{i+1} \cdot y_{i+1} + \Delta_{i-1} \cdot r_i \cdot y_i}{\Delta_{i+1} \cdot r_{i+1} + \Delta_{i-1} \cdot r_i} ,$$

$$r_v = \frac{\Delta_{i+1} \cdot r^2_{i+1} + \Delta_{i-1} \cdot r_i^2}{\Delta_{i+1} \cdot r_{i+1} + \Delta_{i-1} \cdot r_i} ,$$

mit

| | |
|---|---|
| $\Delta_{i-1}, \Delta_{i+1}$ | benachbarte Winkel-Differenzen, |
| $(x_v, y_v)$ | virtuelle Anker-/Senderposition, |

(fortgesetzt)

| | |
|---|---|
| $(x_i,y_i), (x_{i+1},y_{i+1})$ | ausgewählte Anker-/Sender-(virtuelle Senderpositionen, |
| $r_v, r_i, r_{i+1}$ | RSSI Werte, |

zu bestimmen.

6. Vorrichtung (100) gemäß einem der Ansprüche 1 bis 5, bei der die Einrichtung (140) zum Bestimmen der ersten und der zweiten Position ausgebildet ist, um als eine Bewertungsfunktion V einen Durchschnittswert der Abweichungsquadrate der Winkeldifferenzen der Senderichtungen der Sender oder der virtuellen Sender zu bestimmen, gemäß

$$\delta = \frac{1}{2} \cdot \frac{360}{n}$$

$$V = \frac{1}{n} \sum_{i=1}^{n} (\Delta_i - \delta)^2 \, ,$$

wobei n die Anzahl der Sender oder virtuellen Sender und $\Delta_i$ die Winkel zwischen benachbarten Sendern bzw. virtuellen Sendern sind, und abzubrechen, falls der Durchschnittswert eine vorbestimmte Schwelle unterschreitet, oder abzubrechen, falls der Durchschnittswert dazu tendiert, nicht mehr zu fallen.

7. Vorrichtung (100) gemäß einem der Ansprüche 1 bis 6, bei der die Einrichtung (130) zum Bereitstellen ferner ausgebildet ist, um die Senderpositionen der Sender basierend auf den Empfangsleistungen und einer Empfangsrichtung bereitzustellen.

8. Vorrichtung (100) gemäß Anspruch 7, bei der die Einrichtung (130) zum Bereitstellen ferner ausgebildet ist, um die Empfangsrichtungen basierend auf Empfangssignalen einer Mehrzahl von Antennen bereitzustellen.

9. Vorrichtung (100) gemäß einem der Ansprüche 1 bis 8, bei der die Einrichtung (130) zum Bereitstellen ausgebildet ist, um die Senderpositionen durch Detektion von Positionsinformation aus den Signalen der Mehrzahl von Sendern zu ermitteln.

10. Vorrichtung (100) gemäß einem der Ansprüche 1 bis 9, bei der die Einrichtung (140) zum Bestimmen der ersten und der zweiten Position ausgebildet ist, um die erste Position ferner basierend auf den Empfangsleistungen zu bestimmen.

11. Vorrichtung (100) gemäß einem der Ansprüche 1 bis 10, bei der die Einrichtung (140) zum Bestimmen der ersten und der zweiten Position ausgebildet ist, um Positionen durch Ermitteln eines Schwerpunktes oder durch Ermitteln eines durch die Empfangsleistungen gemittelten Schwerpunktes zwischen den Sendern zu bestimmen.

12. Vorrichtung (100) gemäß einem der Ansprüche 1 bis 11, bei der die Einrichtung (140) zum Bestimmen der ersten und zweiten Position ausgebildet ist, um Positionen durch zellulare Positionsbestimmung, durch trigonometrische Berechnung der Position oder durch Fehlerminimierung eines Gleichungssystems zu bestimmen.

13. Vorrichtung (100) gemäß einem der Ansprüche 7 bis 12, bei der die Einrichtung (140) zum Bestimmen der ersten und zweiten Position ferner ausgebildet ist, um eine räumliche Nähe der Sender mit einem Abstand zwischen den Sendern in Bezug zu bringen, um ein Kriterium zur Zusammenfassung von Sendern zu erhalten.

14. Vorrichtung (100) gemäß einem der Ansprüche 1 bis 13, bei der die Einrichtung (140) zum Bestimmen der ersten und zweiten Position ferner ausgebildet ist, um Symmetrien der Sender bzw. virtuellen Sender untereinander bei der Bestimmung der Position oder bei der Zusammenfassung zu berücksichtigen.

**15.** Vorrichtung (100) gemäß einem der Ansprüche 6 bis 14, bei der die Einrichtung (140) zum Bestimmen der ersten und zweiten Position ferner ausgebildet ist, um in der Bewertungsfunktion ferner die Empfangsleistungen zu berücksichtigen.

**16.** Verfahren zum Bestimmen einer Vorrichtungsposition, mit folgenden Schritten:

Empfangen von Signalen einer Mehrzahl von Sendern;
Bestimmen von Empfangsleistungen der Signale der Mehrzahl von Sendern;
Bereitstellen von Senderpositionen der Sender, basierend auf den Signalen der Mehrzahl von Sendern; und
Bestimmen einer ersten Position basierend auf den Senderpositionen;
**gekennzeichnet durch**
Bestimmen von Senderrichtungen basierend auf der ersten Position und den Senderpositionen;
Zusammenfassen von Sendern mit minimaler oder eine Schranke unterschreitender Winkeldifferenz zu einem virtuellen Sender mit virtueller Senderposition, die zwischen den Sendern mit minimaler oder die Schranke unterschreitender Winkeldifferenz liegt, und einer virtuellen Empfangsleistung, die zwischen den Empfangsleistungen der Signale derselben liegt, basierend auf den Senderrichtungen;
Bestimmen einer zweiten Position basierend auf der virtuellen Senderposition und der virtuellen Empfangsleistung und den Senderpositionen und den Empfangsleistungen der verbleibenden Sender.

**17.** Verfahren gemäß Anspruch 16, das ferner einen Schritt des Bestimmens von Senderrichtungen basierend auf der zweiten Position aufweist.

**18.** Verfahren gemäß Anspruch 17, das ferner einen Schritt des Bestimmens einer Position basierend auf den Senderrichtungen, wie sie aus dem Verfahren des Anspruchs 17 resultieren, aufweist.

**19.** Verfahren gemäß Anspruch 18, das die Bestimmung der Senderrichtungen und die darauf folgende Bestimmung der Position Solange wiederholt bis die resultierende Position ein Abbruchkriterium erfüllt.

**20.** Verfahren gemäß Anspruch 19, bei dem das Abbruchkriterium einer Genauigkeit der Position entspricht.

**21.** Computerprogramm mit einem Programmcode zur Durchführung eines der Verfahren der Ansprüche 16 bis 20, wenn das Computerprogramm auf einem Computer abläuft.

**Claims**

**1.** Device (100) for determining a device position, comprising:

a means (110) for receiving signals of a plurality of transmitters;
a means (120) for determining reception powers of the signals of the plurality of transmitters;
a means (130) for providing transmitter positions of the transmitters on the basis of the signals of the plurality of transmitters; and
a means (140) for determining a first position of the device (100) on the basis of the transmitter positions, **characterized in that** the means (140) for determining the first position is further formed to
determine transmitter directions on the basis of the first position and the transmitter positions,
combine, on the basis of the transmitter directions, transmitters having a minimum angle difference or an angle difference falling below a threshold to a virtual transmitter with a virtual transmitter position located between the transmitters having the minimum angle difference or the angle difference falling below the threshold, and with a virtual reception power located between the reception powers of the signals of same, and
determine a second position of the device (100) on the basis of the virtual transmitter positions and the virtual reception powers of the virtual transmitters and the transmitter positions and the reception powers of the remaining transmitters.

**2.** Device (100) according to claim 1, wherein the means (140) for determining the first and the second position is formed to determine new transmitter directions on the basis of the second position and the transmitter positions, and to determine a further position on the basis of the new transmitter directions, wherein a deviation between the device position and the further position is less than the deviation between the first position and the device position.

3. Device (100) according to claim 2, wherein the means (140) for determining the first and the second position is further formed to determine new transmitter directions on the basis of further positions and subsequently again further positions on the basis of again new transmitter directions, until an abortion criterion is met.

4. Device (100) according to one of claims 1 to 3, wherein the means (140) for determining the first and the second position is formed to combine transmitters or virtual transmitters to virtual transmitters until the transmitter directions of the transmitters and the virtual transmitters differ from each other by angles greater than a predefined minimum angle or a minimum number of transmitters and virtual transmitters is no longer reached, wherein transmitters or virtual transmitters the transmitter directions of which differ by less than the minimum angle are selected for combining.

5. Device (100) according to claim 4, wherein the means (140) for determining the first and the second position is formed to determine a position of a virtual transmitter according to the coordinates $x_v$ and $y_v$ in accordance with

$$x_v = \frac{\Delta_{i+1} \cdot r_{i+1} \cdot x_{i+1} + \Delta_{i-1} \cdot r_i \cdot x_i}{\Delta_{i+1} \cdot r_{i+1} + \Delta_{i-1} \cdot r_i},$$

$$y_v = \frac{\Delta_{i+1} \cdot r_{i+1} \cdot y_{i+1} + \Delta_{i-1} \cdot r_i \cdot y_i}{\Delta_{i+1} \cdot r_{i+1} + \Delta_{i-1} \cdot r_i},$$

$$r_v = \frac{\Delta_{i+1} \cdot r^2_{i+1} + \Delta_{i-1} \cdot r_i^2}{\Delta_{i+1} \cdot r_{i+1} + \Delta_{i-1} \cdot r_i},$$

with

| | |
|---|---|
| $\Delta_{i-1}, \Delta_{i+1}$ | neighboring angle differences, |
| $(x_v, y_v)$ | virtual anchor/transmitter position, |
| $(x_i, y_i), (x_{i+1}, y_{i+1})$ | selected anchor/transmitter (virtual transmitter) positions, |
| $r_v, r_i, r_{i+1}$ | RSSI values. |

6. Device (100) according to one of claims 1 to 5, wherein the means (140) for determining the first and the second position is formed to determine an average value of the deviation squares of the angle differences of the transmitter directions of the transmitters or the virtual transmitters as an evaluation function V in accordance with

$$\delta = \frac{1}{2} \cdot \frac{360}{n}$$

$$V = \frac{1}{n} \sum_{i=1}^{n} \left( \Delta_i - \delta \right)^2,$$

wherein n is the number of transmitters or virtual transmitters, and $\Delta_i$ the angles between neighboring transmitters and/or virtual transmitters, and to abort if the average value falls below a predetermined threshold, or to abort if the average value tends to fall no longer.

7. Device (100) according to one of claims 1 to 6, wherein the means (130) for providing is further formed to provide the transmitter positions of the transmitters on the basis of the reception powers and a reception direction.

8. Device (100) according to claim 7, wherein the means (130) for providing is further formed to provide the reception directions on the basis of reception signals of a plurality of antennas.

9. Device (100) according to one of claims 1 to 8, wherein the means (130) for providing is formed to determine the transmitter positions by way of detection of position information from the signals of the plurality of transmitters.

10. Device (100) according to one of claims 1 to 9, wherein the means (140) for determining the first and the second position is formed to determine the first position also on the basis of the reception powers.

11. Device (100) according to one of claims 1 to 10, wherein the means (140) for determining the first and the second position is formed to determine positions by ascertaining a centroid or by ascertaining a centroid averaged by the reception powers between the transmitters.

12. Device (100) according to one of claims 1 to 11, wherein the means (140) for determining the first and the second position is formed to determine positions by way of cellular position determination, by way of trigonometric calculation of the position, or by way of error minimization of a system of equations.

13. Device (400) according to one of claims 7 to 12, wherein the means (140) for determining the first and the second position is further formed to relate a spatial proximity of the transmitters to a distance between the transmitters, in order to obtain a criterion for combining transmitters.

14. Device (100) according to one of claims 1 to 13, wherein the means (140) for determining the first and the second position is further formed to take symmetries of the transmitters and/or virtual transmitters with respect to each other into account when determining the position or when combining.

15. Device (100) according to one of claims 6 to 14, wherein the means (140) for determining the first and the second position is further formed to further take the reception powers into account in the evaluation function.

16. Method of determining a device position, comprising:

   receiving signals of a plurality of transmitters;
   determining reception powers of the signals of the plurality of transmitters;
   providing transmitter positions of the transmitters on the basis of the signals of the plurality of transmitters; and
   determining a first position on the basis of the transmitter positions;
   **characterized by**
   determining transmitter directions on the basis of the first position and the transmitter positions;
   combining, on the basis of the transmitter directions, transmitters having a minimum angle difference or an angle difference falling below a threshold to a virtual transmitter with a virtual transmitter position located between the transmitters having the minimum angle difference or the angle difference falling below the threshold,
   and with a virtual reception power located between the reception powers of the signals of same;
   determining a second position on the basis of the virtual transmitter position and the virtual reception power and the transmitter positions and the reception powers of the remaining transmitters.

17. Method according to claim 16, further comprising a step of determining transmitter directions on the basis of the second position.

18. Method according to claim 17, further comprising a step of determining a position on the basis of the transmitter directions as result from the method of claim 17.

19. Method according to claim 18, which repeats determination of the transmitter directions and subsequent determination of the position until the resulting position meets an abortion criterion.

20. Method according to claim 19, wherein the abortion criterion corresponds to an accuracy of the position.

**21.** Computer program with a program code for performing one of the methods of claims 16 to 20, when the computer program is executed on a computer.

**Revendications**

**1.** Dispositif (100) pour déterminer une position de dispositif, aux caractéristiques suivantes:

un moyen (110) destiné à recevoir les signaux d'une pluralité d'émetteurs;
un moyen (120) destiné à déterminer les puissances de réception des signaux de la pluralité d'émetteurs;
un moyen (130) destiné à mettre à disposition les positions des émetteurs sur base des signaux de la pluralité d'émetteurs; et
un moyen (140) destiné à déterminer une première position du dispositif (100) sur base des positions d'émetteur, **caractérisé par le fait que** le moyen (140) destiné à déterminer la première position est par ailleurs réalisé pour déterminer, sur base de la première position et des positions d'émetteur, les directions d'émetteur, regrouper, sur base des directions d'émetteur, les émetteurs à différence angulaire minimale ou descendant au-dessous d'un seuil, pour obtenir un émetteur virtuel à position d'émetteur virtuelle qui se situe entre les émetteurs à différence angulaire minimale ou descendant au-dessous du seuil et à puissance de réception virtuelle qui se situe entre les puissances de réception des signaux de ces derniers, et déterminer, sur base de la position d'émetteur virtuelle et de la puissance de réception virtuelle des émetteurs virtuels et des positions d'émetteur et des puissances de réception des émetteurs restants, une deuxième position du dispositif (100).

**2.** Dispositif (100) selon la revendication 1, dans lequel le moyen (140) destiné à déterminer la première et la deuxième position est réalisé pour déterminer, sur base de la deuxième position et des positions d'émetteur, de nouvelles directions d'émetteur et pour déterminer, sur base des nouvelles directions d'émetteur, une autre position, un écart entre la position de dispositif et l'autre position étant inférieure à l'écart entre la première position et la position de dispositif.

**3.** Dispositif (100) selon la revendication 2, dans lequel le moyen (140) destiné à déterminer la première et la deuxième position est par ailleurs réalisé pour déterminer de nouvelles directions d'émetteur sur base d'autres positions et ensuite à nouveau d'autres positions sur base à nouveau de nouvelles directions d'émetteur, jusqu'à ce que soit rempli un critère d'interruption.

**4.** Dispositif (100) selon l'une des revendications 1 à 3, dans lequel le moyen (140) destiné à déterminer la première et la deuxième position est réalisé pour regrouper des émetteurs ou émetteurs virtuels, pour obtenir des émetteurs virtuels, jusqu'à ce que les directions des émetteurs et des émetteurs virtuels diffèrent entre eux d'angles qui sont supérieurs à un angle minimum prédéfini ou qu'il soit descendu au-dessous d'un nombre minimum d'émetteurs et d'émetteurs virtuels, des émetteurs ou émetteurs virtuels dont les directions d'émetteur diffèrent entre eux de moins de l'angle minimum étant chaque fois sélectionnés pour être regroupés.

**5.** Dispositif (100) selon la revendication 4, dans lequel le moyen (140) destiné à déterminer la première et la deuxième position est réalisé pour déterminer une position d'un émetteur virtuel selon les coordonnées $x_v$ et $y_v$ selon

$$x_v = \frac{\Delta_{i+1} \cdot r_{i+1} \cdot x_{i+1} + \Delta_{i-1} \cdot r_i \cdot x_i}{\Delta_{i+1} \cdot r_{i+1} + \Delta_{i-1} \cdot r_i} \, ,$$

$$y_v = \frac{\Delta_{i+1} \cdot r_{i+1} \cdot y_{i+1} + \Delta_{i-1} \cdot r_i \cdot y_i}{\Delta_{i+1} \cdot r_{i+1} + \Delta_{i-1} \cdot r_i} \, ,$$

$$r_v = \frac{\Delta_{i+1} \cdot r_{i+1}^2 + \Delta_{i-1} \cdot r_i^2}{\Delta_{i+1} \cdot r_{i+1} + \Delta_{i-1} \cdot r_i} \,,$$

avec

| | |
|---|---|
| $\Delta_{i-1}, \Delta_{i+1}$ | différences d'angles adjacents, |
| $(x_v, y_v)$ | position d'ancre/émetteur virtuelle, |
| $(x_i, y_i), (x_{i+1}, y_{i+1})$ | positions d'ancre/émetteur sélectionnées (positions d'émetteur virtuelles), |
| $r_v, r_i, r_{i+1}$ | valeurs RSSI. |

6. Dispositif (100) selon l'une des revendications 1 à 5, dans lequel le moyen (140) destiné à déterminer la première et la deuxième position est réalisé pour déterminer, comme fonction d'évaluation V, une valeur moyenne des carrés d'écart des différences angulaires des directions des émetteurs ou des émetteurs virtuels, selon

$$\delta = \frac{1}{2} \cdot \frac{360}{n}$$

$$V = \frac{1}{n} \sum_{i=1}^{n} (\Delta_i - \delta)^2$$

où n est le nombre des émetteurs ou émetteurs virtuels et $\Delta_i$ sont les angles entre émetteurs ou émetteurs virtuels adjacents, et à interrompre si la valeur moyenne descend au-dessous d'un seuil prédéterminé, ou à interrompre si la valeur moyenne tend à ne plus tomber.

7. Dispositif (100) selon l'une des revendications 1 à 6, dans lequel le moyen (130) destiné à mettre à disposition est par ailleurs réalisé pour mettre à disposition les positions des émetteurs sur base des puissances de réception et d'une direction de réception.

8. Dispositif (100) selon la revendication 7, dans lequel le moyen (130) destiné à mettre à disposition est par ailleurs réalisé pour mettre à disposition les directions de réception sur base des signaux de réception d'une pluralité d'antennes.

9. Dispositif (100) selon l'une des revendications 1 à 8, dans lequel le moyen (130) destiné à mettre à disposition est réalisé pour déterminer les positions d'émetteur par détection d'information de position à partir des signaux de la pluralité d'émetteurs.

10. Dispositif (100) selon l'une des revendications 1 à 9, dans lequel le moyen (140) destiné à déterminer la première et la deuxième position est réalisé pour déterminer la première position par ailleurs sur base des puissances de réception.

11. Dispositif (100) selon l'une des revendications 1 à 10, dans lequel le moyen (140) destiné à déterminer la première et la deuxième position est réalisé pour déterminer des positions en déterminant un point de gravité ou en déterminant un point de gravité amené à la moyenne sur les puissances de réception entre les émetteurs.

**12.** Dispositif (100) selon l'une des revendications 1 à 11, dans lequel le moyen (140) destiné à déterminer la première et la deuxième position est réalisé pour déterminer des positions par détermination de position cellulaire, par calcul trigonométrique de la position ou par minimisation d'erreurs d'un système d'équations.

**13.** Dispositif (100) selon l'une des revendications 7 à 12, dans lequel le moyen (140) destiné à déterminer la première et la deuxième position est par ailleurs réalisé pour mettre en rapport une proximité spatiale des émetteurs avec une distance entre les émetteurs, pour obtenir un critère de regroupement d'émetteurs.

**14.** Dispositif (100) selon l'une des revendications 1 à 13, dans lequel le moyen (140) destiné à déterminer la première et la deuxième position est par ailleurs réalisé pour tenir compte des symétries des émetteurs ou émetteurs virtuels entre eux lors de la détermination de la position ou lors du regroupement.

**15.** Dispositif (100) selon l'une des revendications 6 à 14, dans lequel le moyen (140) destiné à déterminer la première et la deuxième position est par ailleurs réalisé pour tenir compte par ailleurs, dans la fonction d'évaluation, des puissances de réception.

**16.** Procédé pour déterminer une position de dispositif, aux étapes suivantes consistant à:

recevoir des signaux d'une pluralité d'émetteurs;
déterminer les puissances de réception des signaux de la pluralité d'émetteurs;
mettre à disposition les positions des émetteurs sur base des signaux de la pluralité d'émetteurs; et
déterminer une première position sur base des positions d'émetteur;
**caractérisé par** le fait de
déterminer les directions d'émetteur sur base de la première position et des positions d'émetteur;
regrouper les émetteurs à différence angulaire minimale ou descendant au-dessous d'un seuil, pour obtenir un émetteur virtuel à position d'émetteur virtuelle qui se situe entre les émetteurs à différence angulaire minimale ou descendant au-dessous d'un seuil, et une puissance de réception virtuelle qui se situe entre les puissances de réception des signaux de ces derniers, sur base des directions d'émetteur;
déterminer une deuxième position sur base de la position d'émetteur virtuelle et de la puissance de réception virtuelle et des positions d'émetteur et des puissances de réception des émetteurs restants.

**17.** Procédé selon la revendication 16, présentant par ailleurs une étape consistant à déterminer les directions d'émetteur sur base de la deuxième position.

**18.** Procédé selon la revendication 17, présentant par ailleurs une étape consistant à déterminer une position sur base des directions d'émetteur telles qu'elles résultent du procédé selon la revendication 17.

**19.** Procédé selon la revendication 18, qui répète la détermination des directions d'émetteur et la détermination qui suit de la position jusqu'à ce que la position résultante remplisse un critère d'interruption.

**20.** Procédé selon la revendication 19, dans lequel le critère d'interruption correspond à une précision de la position.

**21.** Programme d'ordinateur avec un code de programme pour réaliser l'un des procédés selon les revendications 16 à 20 lorsque le programme d'ordinateur est exécuté sur un ordinateur.

EINRICHTUNG
ZUM BESTIMMEN
VON EMPFANGS-
LEISTUNGEN

⌐120

EINRICHTUNG
ZUM
EMPFANGEN

⌐110

EINRICHTUNG
ZUM BESTIMMEN
EINER ERSTEN
UND EINER ZWEITEN
POSITION

⌐140

EINRICHTUNG
ZUM
BEREITSTELLEN

⌐130

100

FIG 1

EMPFANGEN VON SIGNALEN — 202

↓ SIGNALE

BESTIMMEN VON EMPFANGSLEISTUNGEN — 204

EMPFANGSLEISTUNGEN ↓         SIGNALE ↓

BEREITSTELLEN VON SENDERPOSITIONEN — 206

EMPFANGSLEISTUNGEN ↓         SENDERPOSITIONEN ↓

BESTIMMEN EINER ERSTEN POSITION — 208

EMPFANGSLEISTUNGEN ↓    SENDERPOSITIONEN ↓    ERSTE POSITION ↓

BESTIMMEN VON SENDERRICHTUNGEN — 210

EMPFANGSLEISTUNGEN ↓    ERSTE POSITION ↓    SENDERPOSITION ↓    SENDERRICHTUNGEN ↓

BESTIMMEN EINER ZWEITEN POSITION — 212

FIG 2

```
┌─────────────────────────────┐
│    EMPFANGEN VON SIGNALEN    │──────── 202
└─────────────────────────────┘
              │
           SIGNALE
              ▼
┌─────────────────────────────┐
│      BESTIMMEN VON           │──────── 204
│    EMPFANGSLEISTUNGEN        │
└─────────────────────────────┘
     │                  │
EMPFANGS|LEISTUNGEN   SIGNALE
     ▼                  ▼
┌─────────────────────────────┐
│     BEREITSTELLEN VON        │──────── 206
│     SENDERPOSITIONEN         │
└─────────────────────────────┘
     │                  │
EMPFANGS|LEISTUNGEN  SENDER|POSITIONEN
     ▼                  ▼
┌─────────────────────────────┐
│      BESTIMMEN EINER         │──────── 208
│      ERSTEN POSITION         │
└─────────────────────────────┘
```

EMPFANGS|LEISTUNGEN
SENDERPOS|ITIONEN
ERSTE|POSITION

NEIN

```
┌─────────────────────────────┐
│      BESTIMMEN VON           │──────── 210
│    SENDERRICHTUNGEN          │
└─────────────────────────────┘
```

EMPFANG|SLEISTUNGEN    ERSTE|POSITION
SENDERPO|SITION    SENDER|RICHTUNGEN

GENAU?         JA        VOR-
                        RICH-
              214        TUNGS-
                        POSITION

```
┌─────────────────────────────┐
│      BESTIMMEN EINER         │──────── 213
│      ZWEITEN POSITION        │
└─────────────────────────────┘
```

FIG 3

| SENDER-EINHEIT | | EMPFANGS-EINHEIT |
| 410 | STEUER-EINHEIT | 430 |
| | 420 | |

400

FIG 4

MINIMALE
WINKEL-DIFFERENZ

VIRTUELLER ANKER

A 502

A 500

A 512 514

A 510

A 504

A 506

A 508

## FIG 5A

VIRTUELLER ANKER

A 502

V 514

A 500

A 504

A 506

A 508

## FIG 5B

A3

A4

M1

A1

A2

FIG 6A (STAND DER TECHNIK)

DURCH DIE NAHE BEI
EINANDER LIEGENDEN
ANKER A4, A5, A6
ERGIBT SICH EINE STARKE
VERSCHIEBUNG DES
SCHWERPUNKTES

A3

A4  A5  A6

M1

BESTIMMTE POSITION

WAHRE POSITION

A1

A2

FIG 6B (STAND DER TECHNIK)

# EP 2 150 833 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Jan Blumenthal et al.** Precise Positioning with a Low Complexity Algorithm in Ad hoc Wireless Sensor Networks. *PIK - Praxis der Informationsverarbeitung und Kommunikation,* Juni 2005